# EUROPÄISCHE PATENTSCHRIFT

(11) **EP 1 049 400 B1**
(45) Veröffentlichungstag und Bekanntmachung des Hinweises auf die Patenterteilung: **13.11.2002**
(21) Anmeldenummer: 99906141.9
(22) Anmeldetag: 16.01.1999
(51) Int. Cl.: A47L 11/40

(54) **KOMBINIERTES HOCHDRUCKREINIGUNGS- UND SAUGGERÄT**
COMBINED HIGH-PRESSURE CLEANING AND SUCTION DEVICE
APPAREIL COMBINE DE NETTOYAGE ET D'ASPIRATION A HAUTE PRESSION

(30) Priorität: 23.01.1998 DE 19802457
(43) Veröffentlichungstag der Anmeldung: 08.11.2000
(73) Patentinhaber: Alfred Kärcher GmbH & Co., 71364 Winnenden (DE)
(72) Erfinder: MORITSCH, Erich, D-73207 Plochingen (DE)
(74) Vertreter: Hoeger, Stellrecht & Partner
(86) Internationale Anmeldenummer: EP9900243
(87) Internationale Veröffentlichungsnummer: WO99037199

(56) Entgegenhaltungen:
- DE-A- 3 728 287
- GB-A- 2 073 827
- US-A- 2 531 370
- US-A- 4 636 230
- DATABASE WPI Section PQ, Week 9701 Derwent Publications Ltd., London, GB; Class P28, AN 97-006354 XP002103342 -& JP 08 275912 A (NIPPON DENSHI SERVICE KK), 22. Oktober 1996

## Beschreibung

Die Erfindung betrifft ein kombiniertes Hochdruckreinigungs- und Sauggerät mit einem Antriebsmotor, dessen Antriebswelle sowohl eine Hochdruckpumpe als auch ein Sauggebläse über jeweils eine Kupplung antreibt, wobei Schaltmittel vorgesehen sind, die wahlweise eine der beiden Kupplungen schließen und die jeweils andere öffnen.

Aus der DE 37 28 287 C2 ist ein Hochdruckreinigungsgerät bekannt, bei dem die Saugturbine und die Hochdruckpumpe eine Baueinheit bilden. Diese ist mit dem Antriebsmotor verbunden, der bei seinem Betrieb sowohl die Hochdruckpumpe als auch das Sauggebläse antreibt. Dementsprechend muß der Antriebsmotor entsprechend groß und kräftig ausgelegt werden.

In der JP-A-8275912 ist weiterhin ein kombiniertes Saug- und Sprühgerät beschrieben, welches eine Saugturbine und einen Luftkompressor aufweist, die beide über Kupplungen vom selben Elektromotor angetrieben werden. Durch Betätigung der Kupplungen kann ausgewählt werden, ob der Motor nur die Saugturbine oder nur den Luftkompressor betreibt.

Ausgehend von diesem Stand der Technik ist es Aufgabe der Erfindung, ein gattungsgemäßes kombiniertes Hochdruckreinigungs- und Sauggerät so auszubilden, daß sich ein besonders einfacher Aufbau ergibt.

Diese Aufgabe wird bei einem kombinierten Hochdruckreinigungs- und Sauggerät der eingangs beschriebenen Art erfindungsgemäß dadurch gelöst, daß die Kupplungen als Freilaufkupplungen ausgebildet sind, die eine Drehmitnahme nur in einer Drehrichtung bewirken, daß die Drehmitnahmerichtung der beiden Freilaufkupplungen entgegengesetzt ist und daß die Schaltmittel zum wahlweisen Schließen und Öffnen der Kupplungen Mittel zur Drehrichtungsumkehr der Antriebswelle des Antriebsmotors sind.

Bei einer solchen Ausgestaltung ergibt sich ein besonders einfacher Aufbau, denn es ist bei dieser Konstruktion lediglich notwendig, die Drehrichtung der Antriebswelle des Motors umzukehren, um wahlweise die eine oder die andere Kupplung zu schließen. Die Kupplungen nehmen das von ihnen angetriebene Aggregat nur dann mit, wenn die Antriebswelle in einer bestimmten Drehrichtung dreht, in der entgegengesetzten Richtung dagegen erfolgt keine Drehmitnahme, die Kupplung läuft dann frei.

Wesentlich ist, daß die Betätigung immer so erfolgt, daß nur eine Drehverbindung zwischen dem Motor und einem der beiden Aggregate wirksam ist, während die Verbindung zu dem jeweils anderen Aggregat geöffnet ist.

Es ist günstig, wenn der Antriebsmotor, die Kupplungen, die Hochdruckpumpe und das Sauggebläse koaxial zueinander angeordnet sind.

Insbesondere kann vorgesehen sein, daß eine Kupplung und die Hochdruckpumpe auf einer Seite des Antriebsmotors angeordnet sind und die andere Kupplung und das Sauggebläse auf der gegenüberliegenden Seite.

Es ist günstig, wenn die Antriebswelle im Gerät senkrecht angeordnet ist, dann sind auch die gesamten anderen Aggregate als turmartige Anordnung im Gerät unterzubringen.

Bei einer abgewandelten Ausführungsform kann die Antriebswelle im Gerät auch horizontal angeordnet sein, wobei dann die anderen Aggregate nebeneinander angeordnet werden.

Zwischen die Kupplung der Hochdruckpumpe und die Hochdruckpumpe kann ein Getriebe eingeschaltet sein, dasselbe gilt auch für die Kupplung des Sauggebläses und das Sauggebläse.

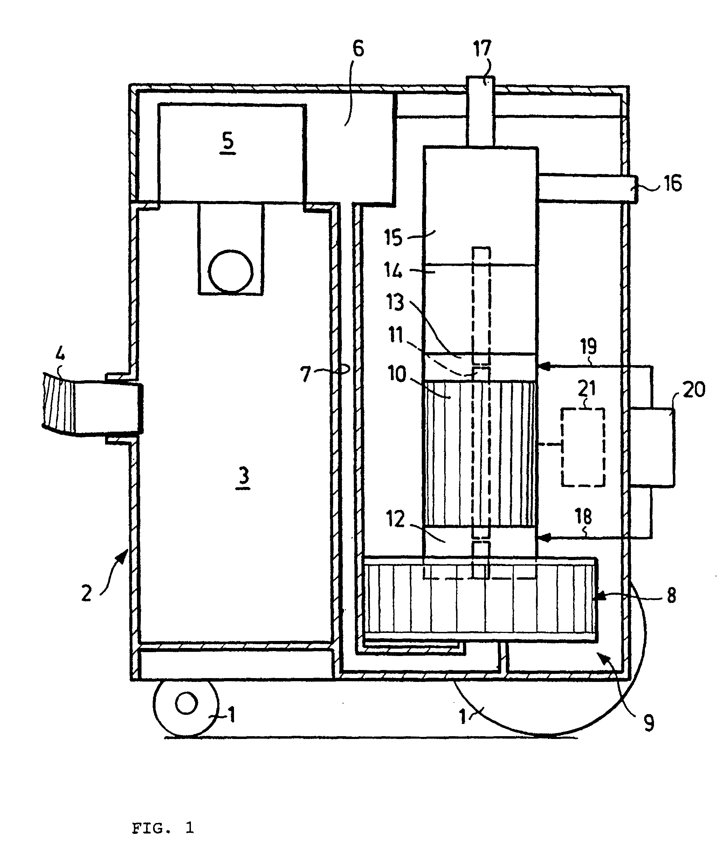

Die nachfolgende Beschreibung einer bevorzugten Ausführungsform der Erfindung dient im Zusammenhang mit der Zeichnung der näheren Erläuterung. Die Zeichnung zeigt einen schematischen Längsschnittansicht durch ein kombiniertes Hochdruckreinigungs- und Sauggerät, wobei nur für die Erfindung wesentliche Teile dargestellt sind.

Dieses Gerät umfaßt ein auf Rädern 1 fahrbares Gehäuse 2, in dem ein Schmutzsammelbehälter 3 angeordnet ist. In diesen mündet eine Saugleitung 4 ein, die beispielsweise mit einer in der Zeichnung nicht dargestellten Bodensaugdüse verbunden ist. An der Oberseite ist der Schmutzsammelbehälter 3 von einem Filter 5 überfangen, welches eine gefilterte Verbindung vom Innenraum des Schmutzsammelbehälters 3 zu einer Saugkammer 6 bildet. Die Saugkammer 6 steht über eine weitere Saugleitung 7 mit einer Saugturbine 8 eines Saugaggregates 9 in Verbindung. Diese Saugturbine 8 saugt Luft aus dem Schmutzsammelbehälter 3 durch das Filter 5 hindurch und gibt die dann gereinigte Luft in die Umgebung ab, so daß im Schmutzsammelbehälter 3 ein Unterdruck zum Ansaugen eines Luftstromes über die Saugleitung 4 entsteht.

Die Saugturbine 8 wird von einem Antriebsmotor 10 angetrieben, der mit senkrecht verlaufender Antriebswelle 11 koaxial oberhalb der Saugturbine 8 angeordnet ist. Die Antriebswelle 11 des Antriebsmotors 10 ist über eine Kupplung 12 mit der Saugturbine 8 verbunden.

Auf der gegenüberliegenden Seite ist die Antriebswelle 11 des Antriebsmotors 10 ebenfalls über eine Kupplung 13 und ein Getriebe 14 mit einer Hochdruckpumpe 15 verbunden, die koaxial oberhalb des Antriebsmotors 10 angeordnet ist und über eine Saugleitung 16 eine Reinigungsflüssigkeit ansaugt, die über eine Druckleitung 17 unter hohem Druck abgegeben werden kann, beispielsweise zu einem flexiblen Hochdruckschlauch mit Sprühlanze.

Der Antriebsmotor 10 kann in beliebiger Weise ausgebildet sein, es kann sich beispielsweise um einen elektrischen Universalmotor oder einen elektrischen Asynchronmotor handeln, der Antriebsmotor kann jedoch auch ein Verbrennungsmotor sein.

Bei einer nicht erfindungsgemäßen Ausgestaltung sind die Kupplungen 12 und 13 über Steuerleitungen 18, 19 mit einer Steuerung 20 verbunden, die durch den Benutzer so geschaltet werden kann, daß entweder die Kupplung 12 oder die Kupplung 13 geschlossen ist, während die jeweils andere Kupplung offen ist, so daß dadurch gewährleistet ist, daß der Antriebsmotor 10 jeweils nur entweder die Hochdruckpumpe 15 oder die Saugturbine 8 antreibt. Die Betätigung der Kupplung kann dabei in verschiedener Weise erfolgen, es kann sich z.B. um eine elektromagnetisch betätigbare Kupplung handeln, um eine hydraulisch betätigbare Kupplung oder um eine pneumatisch betätigbare Kupplung.

Bei einer erfindungsgemäßen Ausgestaltung ist eine Steuerung 21 vorgesehen (in der Zeichnung gestrichelt dargestellt), die die Drehrichtung der Antriebswelle 11 umschaltet. Dies kann entweder durch Umschaltung der Drehrichtung des Antriebsmotors 10 erfolgen oder dadurch, daß zwischen die Antriebswelle 11 und den Antriebsmotor 10 ein Getriebe eingeschaltet wird, welches bei gleichlaufender Drehrichtung des Elektromotors die Antriebswelle wahlweise in der einen oder in der anderen Richtung antreibt.

Zusätzlich werden bei dieser erfindungsgemäßen Ausgestaltung die Kupplungen 12, 13 als Freilaufkupplungen ausgebildet, also als Kupplungen, die eine Drehmitnahme nur in einer Drehrichtung ermöglichen, während sie in der anderen Drehrichtung freilaufen und keine Drehmomente übertragen. Die Drehrichtung der beiden Kupplungen 12 und 13, in der eine Drehmitnahme erfolgt, ist dann bei beiden Kupplungen 12 und 13 entgegengesetzt, so daß beim Verdrehen der Antriebswelle 11 in einer Richtung beispielsweise nur die Saugturbine gedreht wird, bei der Umkehr der Drehrichtung der Antriebswelle 11 dagegen nur die Hochdruckpumpe.

Im Betrieb hat der Benutzer also die Möglichkeit, durch Betätigung der Steuerung 21 auszuwählen, ob der Antriebsmotor die Saugturbine antreibt oder die Hochdruckpumpe, in jedem Fall ist sichergestellt, daß der Antriebsmotor nicht beide Aggregate gleichzeitig antreiben muß, so daß der Antriebsmotor entsprechend für geringere Leistung ausgelegt werden kann.

Bei dem dargestellten Ausführungsbeispiel sind der Antriebsmotor, die Kupplungen, die Saugturbine, die Hochdruckpumpe und gegebenenfalls zwischengeschaltete Getriebe koaxial zueinander angeordnet, wobei die gemeinsame Achse senkrecht positioniert ist.

Bei einem in der Zeichnung nicht dargestellten, abgewandelten Ausführungsbeispiel könnte diese gemeinsame Achse auch horizontal angeordnet sein, dies hätte insbesondere den Vorteil, daß an Undichtigkeiten aus den Einzelaggregaten austretende Flüssigkeiten nicht auf darunterliegende Aggregate gelangen, sondern nach unten abtropfen, ohne andere Aggregate zu beeinträchtigen.

## Patentansprüche

1. Kombiniertes Hochdruckreinigungs- und Sauggerät mit einem Antriebsmotor (10), dessen Antriebswelle (11) sowohl eine Hochdruckpumpe (15) als auch ein Sauggebläse (8) über jeweils eine Kupplung (13 bzw. 12) antreibt, wobei Schaltmittel (21) vorgesehen sind, die wahlweise eine der beiden Kupplungen (12, 13) schließen und die jeweils andere öffnen, **dadurch gekennzeichnet, daß** die Kupplungen (12, 13) als Freilaufkupplungen ausgebildet sind, die eine Drehmitnahme nur in einer Drehrichtung bewirken, daß die Drehmitnahmerichtung der beiden Freilaufkupplungen entgegengesetzt ist und daß die Schaltmittel (21) zum wahlweisen Schließen und öffnen der Kupplungen (12, 13) Mittel zur Drehrichtungsumkehr der Antriebswelle (11) sind.

2. Gerät nach Anspruch 1, **dadurch gekennzeichnet, daß** der Antriebsmotor (10), die Kupplungen (12, 13), die Hochdruckpumpe (15) und das Sauggebläse (8) koaxial zueinander angeordnet sind.

3. Gerät nach Anspruch 2, **dadurch gekennzeichnet, daß** eine Kupplung (13) und die Hochdruckpumpe (15) auf einer Seite des Antriebsmotors (10) angeordnet sind und die andere Kupplung (12) und das Sauggebläse (8) auf der gegenüberliegenden Seite.

4. Gerät nach einem der Ansprüche 2 oder 3, **dadurch gekennzeichnet, daß** die Antriebswelle (11) im Gerät senkrecht angeordnet ist.

5. Gerät nach einem der Ansprüche 2 oder 3, **dadurch gekennzeichnet, daß** die Antriebswelle (11) im Gehäuse waagerecht angeordnet ist.

6. Gerät nach einem der voranstehenden Ansprüche, **dadurch gekennzeichnet, daß** zwischen die Kupplung (13) der Hochdruckpumpe (15) und die Hochdruckpumpe (15) ein Getriebe (14) eingeschaltet ist.

7. Gerät nach einem der voranstehenden Ansprüche, **dadurch gekennzeichnet, daß** zwischen die Kupplung (12) des Sauggebläses (8) und das Sauggebläse (8) ein Getriebe eingeschaltet ist.

## Claims

1. A combined high-pressure cleaning and suction appliance with a drive motor (10), the drive shaft (11) of which drives both a high-pressure pump (15) and a suction fan (8) by way of one coupling (13 and 12 respectively) in each case, switching means (21) being provided which optionally close one of the two couplings (12, 13) and open the other respective one in each case, **characterized in that** the couplings (12, 13) are constructed in the form of freewheel clutches which cause a rotational entrainment in only one direction of rotation, the rotational entrainment direction of the two freewheel clutches is opposed, and the switching means (21) for selectively closing and opening the couplings (12, 13) are means for reversing the rotational direction of the drive shaft (11).

2. An appliance according to Claim 1, **characterized in that** the drive motor (10), the couplings (12, 13), the high-pressure pump (15) and the suction fan (8) are arranged coaxially with one another.

3. An appliance according to Claim 2, **characterized in that** one coupling (13) and the high-pressure pump (15) are arranged on one side of the drive motor (10), and the other coupling (12) and the suction fan (8) are arranged on the opposite side.

4. An appliance according to one of Claims 2 and 3, **characterized in that** the drive shaft (11) is arranged vertically in the appliance.

5. An appliance according to one of Claims 2 and 3, **characterized in that** the drive shaft (11) is arranged horizontally in the housing.

6. An appliance according to one of the preceding Claims, **characterized in that** a gearing (14) is connected between the coupling (13) of the high-pressure pump (15) and the high-pressure pump (15).

7. An appliance according to one of the preceding Claims, **characterized in that** a gearing is connected between the coupling (12) of the suction fan (8) and the suction fan (8).

## Revendications

1. Appareil combiné de nettoyage à haute pression et d'aspiration, comportant un moteur d'entraînement (10) dont l'arbre d'entraînement (11) entraîne aussi bien une pompe à haute pression (15) qu'un ventilateur aspirant (8) via un accouplement respectif (13 ou 12), dans lequel sont prévus des moyens d'inversion (21) qui ferment au choix l'un des deux accouplements (12, 13) et qui ouvrent l'autre accouplement respectif, **caractérisé en ce que** les accouplements (12, 13) sont réalisés sous forme d'accouplements à roue libre qui procurent un entraînement en rotation dans une seule direction de rotation, de sorte que les directions d'entraînement en rotation des deux accouplements à roue libre sont en sens opposés, et **en ce que** les moyens d'inversion (21) pour la fermeture et l'ouverture sélective des accouplements (12, 13) sont des moyens pour inverser la direction de rotation de l'arbre d'entraînement (11).

2. Appareil selon la revendication 1, **caractérisé en ce que** le moteur d'entraînement (10), les accouplements (12, 13), la pompe à haute pression (15) et le ventilateur aspirant (8) sont agencés coaxialement les uns par rapport aux autres.

3. Appareil selon la revendication 2, **caractérisé en ce qu'**un accouplement (13) et la pompe à haute pression (15) sont agencés sur un côté du moteur d'entraînement (10) et l'autre accouplement (12) et le ventilateur aspirant (8) sont agencés sur le côté opposé.

4. Appareil selon l'une ou l'autre des revendications 2 et 3, **caractérisé en ce que** l'arbre d'entraînement (11) est agencé verticalement dans l'appareil.

5. Appareil selon l'une ou l'autre des revendications 2 et 3, **caractérisé en ce que** l'arbre d'entraînement (11) est agencé horizontalement dans le boîtier.

6. Appareil selon l'une des revendications précédentes, **caractérisé en ce qu'**un mécanisme de transmission (14) est interposé entre l'accouplement (13) de la pompe à haute pression (15) et la pompe à haute pression (15).

7. Appareil selon l'une des revendications précédentes, **caractérisé en ce qu'**un mécanisme de transmission est interposé entre l'accouplement (12) du ventilateur aspirant (8) et le ventilateur aspirant (8).
